# FASCICULE DE BREVET EUROPEEN

(11) **EP 2 697 497 B1**
(45) Date de publication et mention de la délivrance du brevet: **07.08.2019**
(21) Numéro de dépôt: 12721330.4
(22) Date de dépôt: 12.04.2012
(51) Int. Cl.: F02K 1/72, F02K 1/76

(54) **INVERSEUR DE POUSSÉE POUR TURBORÉACTEUR D'AÉRONEF**
SCHUBUMKEHRER FÜR FLUGZEUG-TURBOFANTRIEBWERK
THRUST REVERSER FOR AIRCRAFT TURBOFAN ENGINE

(30) Priorité: 14.04.2011 FR 1101160
(43) Date de publication de la demande: 19.02.2014
(73) Titulaire: Safran Nacelles, 76700 Gonfreville-l'Orcher (FR)
(72) Inventeur: DEZEUSTRE, Nicolas, 76600 Le Havre (FR); KERBLER, Olivier, 92160 Antony (FR); HURLIN, Hervé, 91430 Igny (FR); MORADELL-CASELLAS, Pierre, 61100 Saint Georges Des Groseillers (FR)
(74) Mandataire: Gaillarde, Frédéric F. Ch.
(86) Numéro de dépôt international: PCT/FR2012/050796
(87) Numéro de publication internationale: WO 2012/140368

(56) Documents cités:
- EP-A1- 1 239 139
- EP-A1- 1 286 037
- WO-A1-2009/147333
- WO-A2-2012/059677
- FR-A1- 2 921 976
- US-A- 3 503 211
- US-B1- 6 340 135

## Description

La présente invention se rapporte à un inverseur de poussée pour turboréacteur d'aéronef.

Un avion est mû par plusieurs turboréacteurs logés chacun dans une nacelle servant à canaliser les flux d'air engendrés par le turboréacteur qui abrite également un ensemble de dispositifs d'actionnement assurant diverses fonctions, lorsque le turboréacteur est en fonctionnement ou à l'arrêt.

Ces dispositifs d'actionnement peuvent comprendre, notamment, un système mécanique d'inversion de poussée.

Une nacelle présente généralement une structure tubulaire comprenant une entrée d'air en amont du turboréacteur, une section médiane destinée à entourer une soufflante du turboréacteur, une section aval abritant des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à engendrer par l'intermédiaire des pales de la soufflante, un flux d'air dont une partie, appelée flux chaud ou primaire, circule dans la chambre de combustion du turboréacteur, et dont l'autre partie, appelée flux froid ou secondaire, circule à l'extérieur du turboréacteur à travers un passage annulaire, également appelé veine, formé entre des carénages du turboréacteur et des parois internes de la nacelle. Les deux flux d'air sont éjectés du turboréacteur par l'arrière de la nacelle.

Le rôle d'un inverseur de poussée est, lors de l'atterrissage d'un avion, d'améliorer la capacité de freinage de celui-ci en redirigeant vers l'avant au moins une partie de la poussée engendrée par le turboréacteur. Dans cette phase, l'inverseur obstrue la veine du flux froid et dirige ce dernier vers l'avant de la nacelle, engendrant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend des capots mobiles déplaçables entre une position fermée ou « jet direct » dans laquelle ils ferment ce passage et une position ouverte ou « jet inverse » dans laquelle ils ouvrent dans la nacelle un passage destiné au flux dévié. Ces capots peuvent remplir une fonction de déviation ou simplement d'activation d'autres moyens de déviation.

Dans le cas d'un inverseur de poussée à grilles, également connu sous le nom d'inverseur à cascade, la réorientation du flux d'air est effectuée par des grilles de déviation, le capot n'ayant qu'une simple fonction de coulissage visant à découvrir ou recouvrir ces grilles.

La translation du capot mobile s'effectue selon un axe longitudinal sensiblement parallèle à l'axe de la nacelle. Eventuellement, des volets d'inversion de poussée, actionnés par le coulissement du capot, permettent une obstruction de la veine du flux froid en aval des grilles de déviation, de manière à optimiser la réorientation du flux froid vers l'extérieur de la nacelle.

On connaît de la technique antérieure, et notamment des documents FR 2 916 426, EP 1 239 139 et WO 2012/059677 un inverseur de poussée à grilles dont le capot mobile est monobloc et monté coulissant sur des glissières disposées de part et d'autre du pylône de suspension de l'ensemble formé par le turboréacteur et sa nacelle.

Par « capot monobloc », on entend un capot de forme quasi-annulaire, s'étendant d'un côté à l'autre du pylône sans interruption.

Un tel capot est souvent désigné par les termes anglo-saxons « O-duct », par allusion à la forme de virole d'un tel capot, par opposition au « D-duct », qui comprend en fait deux demi-capots s'étendant chacun sur une demi-circonférence de la nacelle.

Le coulissement d'un capot de type « O-duct » entre ses positions « jet direct » et « jet inverse » est classiquement assuré par une pluralité d'actionneurs, de type mécano-électrique ou hydraulique, par exemple.

Typiquement, on trouve quatre ou six actionneurs, à savoir respectivement deux ou trois actionneurs répartis sur chaque moitié de l'inverseur de poussée, de part et d'autre du pylône de suspension et montés sur un cadre avant de l'inverseur de poussée.

Pour supporter les efforts transmis par ces actionneurs, on peut prévoir notamment des structures de renforcement, par exemple au niveau des fixations des vérins sur le capot mobile, tels que la présence de ferrures, l'utilisation de panneaux composites épaissis et des âmes de structures sandwichs plus denses.

Or, ces structures alourdissent l'inverseur de poussée.

Un tel montage se heurte à d'autres inconvénients.

Ainsi, regrouper les actionneurs dans la partie supérieure de la circonférence de l'inverseur de poussée risque de poser des difficultés résultant de couples de basculement engendrés par les efforts générés par ces actionneurs lors de l'ouverture et la fermeture du capot.

Cette position des vérins peut générer des phénomènes de coincements dans les rails de coulissement du capot, du fait de leur déport circonférentiel par rapport à ces rails.

Un but de la présente invention est de remédier aux inconvénients susmentionnés.

Un but de la présente invention est, ainsi, de proposer un inverseur de poussée qui limite les risques de coincement du coulissement du capot d'inversion de poussée.

Il est également désirable de proposer un inverseur de poussée qui permette de réduire la masse de la nacelle relativement aux inverseurs existants.

Un autre but de la présente invention est de proposer un inverseur de poussée qui supprime toute structure de renforcement.

On atteint ce but de l'invention avec un inverseur de poussée comprenant des grilles de déviation de flux et un capot mobile entre une position d'ouverture dégageant lesdites grilles de déviation et une position de fermeture recouvrant lesdites grilles de déviation et comprenant, en outre, des rails aptes à coulisser dans des glissières, les rails étant montés sur ledit capot et les glissières étant montées directement ou indirectement de part et d'autre d'un pylône du suspension, ou inversement.

Cet inverseur de poussée est remarquable en ce qu'il comprend au moins un actionneur apte à faire coulisser le capot entre ses positions d'ouverture et de fermeture, l'actionneur étant disposé dans le prolongement du rail correspondant, ledit actionneur étant adapté pour tirer sur le rail correspondant ou sur la glissière correspondante le cas échéant, ledit actionneur comprenant au moins une poulie amont et une poulie aval respectivement montées de part et d'autre d'un rail correspondant ou de la glissière correspondante le cas échéant, chaque poulie étant apte à tourner selon un axe qui peut être perpendiculaire à l'axe longitudinal de l'inverseur sous l'action d'au moins un moteur d'entraînement et un élément de transmission de mouvement adapté pour transmettre le mouvement de rotation des poulies audit rail ou à ladite glissière, le cas échéant.

Le type d'actionneurs et leur position particulière permet de supprimer le moment de basculement du capot mobile imputable aux efforts exercés par les actionneurs dans leur position classique tendant à désaligner les rails par rapport aux glissières, et à éviter ainsi leur coincement mutuel.

Suivant d'autres caractéristiques optionnelles de l'inverseur de poussée selon l'invention, prises seules ou en combinaison :
- les glissières ou les rails, le cas échéant, sont ménagés sur un profilé fixé au pylône formant une base du pylône ou sur le pylône;
- les poulies et le ou les moteurs d'entraînement sont montés dans le profilé fixé au pylône ou directement au pylône de suspension ;
- les poulies et le ou les moteurs d'entraînement sont montés dans le capot ;
- un unique moteur d'entraînement est apte à entrainer les poulies amont et/ou aval de plusieurs actionneurs ;
- le ou les moteurs d'entraînement peuvent entraîner indifféremment les poulies amont ou aval d'un et/ou de plusieurs actionneurs ;
- le capot mobile est monobloc ;
- l'inverseur peut comprendre, en outre, des volets d'inversion de poussée, agencés de manière à exercer un effort de poussée sur un bord amont d'une paroi interne dudit capot mobile.

L'invention concerne, également, une nacelle pour turboréacteur d'aéronef remarquable en ce qu'elle comprend un inverseur de poussée, tel que précité.

D'autres caractéristiques et avantages de la présente invention apparaîtront à la lumière de la description qui va suivre, et à l'examen des figures ci-annexées, dans lesquelles :
- la figure 1 est une représentation schématique globale d'une nacelle de turboréacteur présentant un inverseur de poussée selon l'invention comportant un capot mobile monobloc (inverseur de type « O-duct ») ;
- la figure 2 une représentation schématique globale de la nacelle de turboréacteur de la figure 1, dont l'intérieur du capot de l'inverseur est vu en transparence ;
- la figure 3 est une représentation schématique en demi-coupe longitudinale de la nacelle de la figure 1 ;
- la figure 4 est une vue en perspective du capot de la figure 1 monté sur un pylone d'aéronef ;
- la figure 5 est une zone agrandie B de la figure 4 ;
- la figure 6 montre de manière schématique, en coupe transversale, le positionnement des deux actionneurs du capot mobile de l'inverseur de poussée ;
- la figure 7 est une vue en perspective d'une réalisation d'un actionneur d'un inverseur de poussée selon l'invention, monté dans un pylône d'aéronef;
- les figures 8a et 8b sont des vues en perspective de l'actionneur de la figure 7 respectivement au repos et en fonctionnement pour déplacer le capot de la figure 1;
- la figure 9 est une vue en perspective d'une variante de réalisation de l'actionneur de la figure 8b ;
- les figures 10a et 10b sont des vues en perspective d'un actionneur d'un inverseur de poussée ne faisant pas partie de l'invention, monté dans un pylône d'aéronef, illustré en fonctionnement pour déplacer le capot de la figure 1;
- la figure 11 est une vue agrandie de la zone C sur la figure 10a;
- la figure 12 est une vue en coupe de la liaison entre un rail et une vis de l'actionneur de la figure 10a ;
- la figure 13 est une vue en perspective d'une variante de réalisation de l'actionneur illustré sur la figure 10a;
- les figures 14a et 14b sont des vues en coupe de deux modes de réalisation de pylônes de suspension.

Sur l'ensemble de ces figures, des références identiques ou analogues désignent des organes ou ensembles d'organes identiques ou analogues.

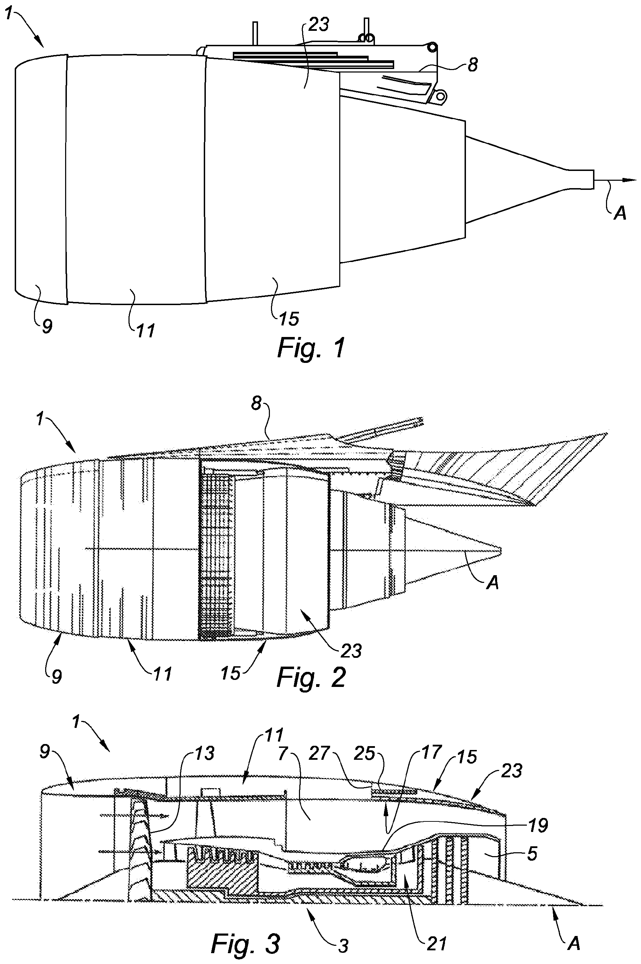

En référence aux figures 1 à 3, une nacelle 1 est destinée à constituer un logement tubulaire pour un turboréacteur double flux 3 et sert à canaliser les flux d'air chaud 5 et froid 7 engendrés pas ce turboréacteur 3, comme indiqué dans le préambule de la présente description.

Cette nacelle 1 est destinée à être suspendue à un pylône 8, lui-même fixé sous l'aile d'un aéronef.

Comme indiqué précédemment, la nacelle 1 possède, de façon générale, une structure comprenant une section amont 9 formant une entrée d'air, une section médiane 11 entourant la soufflante 13 du turboréacteur 3 et une section aval 15 entourant le turboréacteur 3.

La section aval 15 comprend une structure externe 17 comportant un dispositif d'inversion de poussée et une structure interne 19 de carénage du moteur 21 du turboréacteur définissant avec la structure externe 17 la veine du flux froid 7, dans le cas de la nacelle de turboréacteur double flux telle que présentée ici.

Le dispositif d'inversion de poussée comprend un capot 23 monté mobile en translation selon une direction sensiblement parallèle à l'axe longitudinal A de la nacelle 1.

Ce capot 23 est apte à passer alternativement d'une position de fermeture (position représentée aux figures 1 à 3) dans laquelle il assure la continuité aérodynamique des lignes de la section aval 15 de la nacelle 1 et recouvre des grilles 25 de déviation de flux d'air, à une position d'ouverture dans laquelle il ouvre un passage dans la nacelle 1 en découvrant ces grilles de déviation 25.

Plus précisément, dans un mode de réalisation préféré de la présente invention, le capot mobile 23 est monobloc, c'est-à-dire qu'il comprend un seul capot mobile monobloc, de forme quasi-annulaire, s'étendant d'un côté à l'autre du pylône 8 sans interruption (capot mobile dit « O-duct »).

Les grilles de déviation 25 présentent chacune une pluralité d'aubes déflectrices.

Tel qu'illustré sur la figure 3, la section aval 15 peut comprendre, en outre, un cadre avant 27 qui prolonge en amont le capot 23 et peut assurer le rattachement de la section aval 15 avec la section médiane 11 entourant la soufflante 13 du turboréacteur.

La translation du capot mobile 23 vers l'aval de la nacelle dégage dans celle-ci une ouverture à travers laquelle le flux froid du turboréacteur peut s'échapper au moins partiellement, cette portion de flux étant réorientée vers l'avant de la nacelle par les grilles de déviation 25, engendrant de ce fait une contre-poussée apte à contribuer au freinage de l'avion.

L'orientation du flux froid vers les grilles de déviation 25 est effectuée par une pluralité de volets d'inversion (non illustrés), répartis par exemple à l'intérieur du capot mobile 23 ou sur la circonférence interne de ce capot mobile 23, montés chacun pivotant entre une position rétractée et une position déployée dans laquelle, en situation d'inversion de poussée, ils obturent au moins partiellement cette veine et dévient le flux froid à travers les grilles de déviation 25.

Plus précisément, dans le mode de réalisation représenté aux figures 1 à 3, les grilles de déviation 25 peuvent être du type rétractable, c'est-à-dire qu'elles sont aptes à coulisser d'une position amont à une position aval sous l'effet de l'ouverture du capot mobile 23 et inversement d'une position aval à une position amont.

De façon connue, le mouvement de coulissement aval des grilles de déviation 25 est effectué par des butées disposées de manière appropriée sur le bord amont de la paroi externe du capot mobile 23.

Plus précisément, les volets d'inversion de poussée sont montés chacun pivotant et coulissant à l'intérieur de gorges solidaires des grilles de déviation 25.

Une première bielle relie l'extrémité pivotante et coulissante de chaque volet au cadre avant fixe 27, et une deuxième bielle est articulée d'une part sensiblement à mi-longueur du volet d'inversion de poussée, et d'autre part, dans la zone amont des grilles d'inversion de poussée 25.

Lorsque le capot mobile 23 passe d'une position de jet direct dans laquelle il couvre les grilles de déviation 25 vers une position intermédiaire avant l'inversion de poussée les deux bielles et le volet d'inversion de poussée associé demeurent immobiles, permettant à ce volet d'inversion de poussée de sortir de la cavité définie par les parois externe et interne du capot mobile 23.

Lorsque le capot mobile 23 continue son coulissement pour atteindre la position en jet inversé ou les volets obturent la veine de flux froid 7, les butées disposées sur le bord amont de la paroi externe de ce capot mobile ont pour effet de faire coulisser les grilles d'inversion de poussée 25 vers une position aval.

Sous l'effet de ce coulissement, la première bielle a pour effet de faire coulisser le point d'articulation de l'extrémité du volet d'inversion de poussée à l'intérieur de la gorge, permettant l'extraction de ce volet d'inversion de poussée de la cavité définie par les parois.

La deuxième bielle a, quant à elle, pour effet de faire pivoter le volet d'inversion de poussée jusqu'à sa position d'obturation de la veine de flux froid 7 permettant d'orienter ce flux froid à travers les grilles d'inversion de poussée 25, vers l'amont de la nacelle 1.

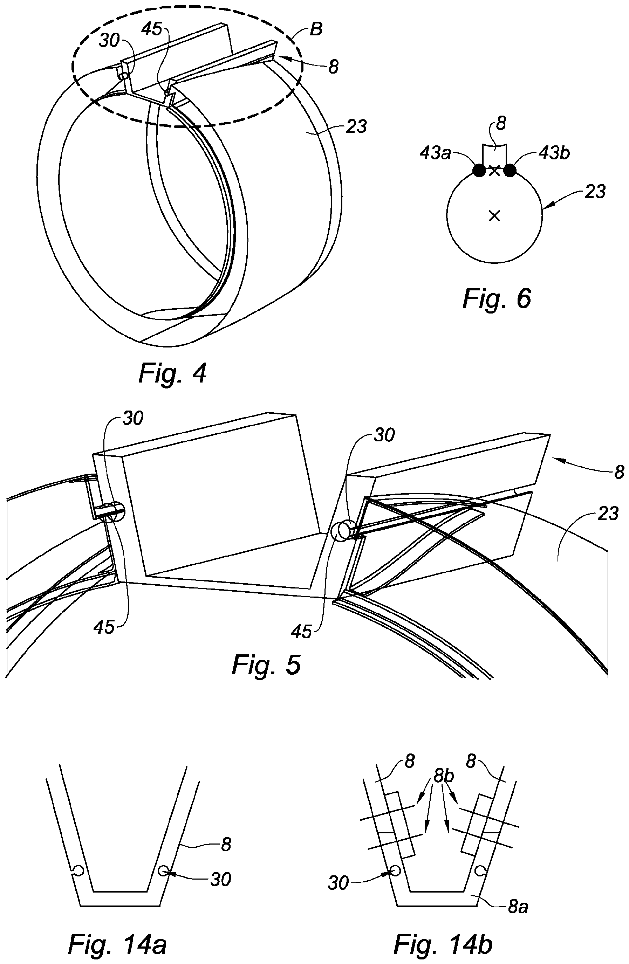

Les moyens d'actionnement du capot mobile 23, permettant de réaliser son coulissement de l'une à l'autre des positions, sont représentés de manière schématique à la figure 6.

Dans un mode de réalisation non limitatif de la présente invention ces moyens comprennent deux actionneurs 43a et 43b disposés dans la partie supérieure du capot mobile (c'est-à-dire vers le haut de la planche de dessins 2/4 ci-annexée), à 12 heures, de part et d'autre du pylône de suspension 8.

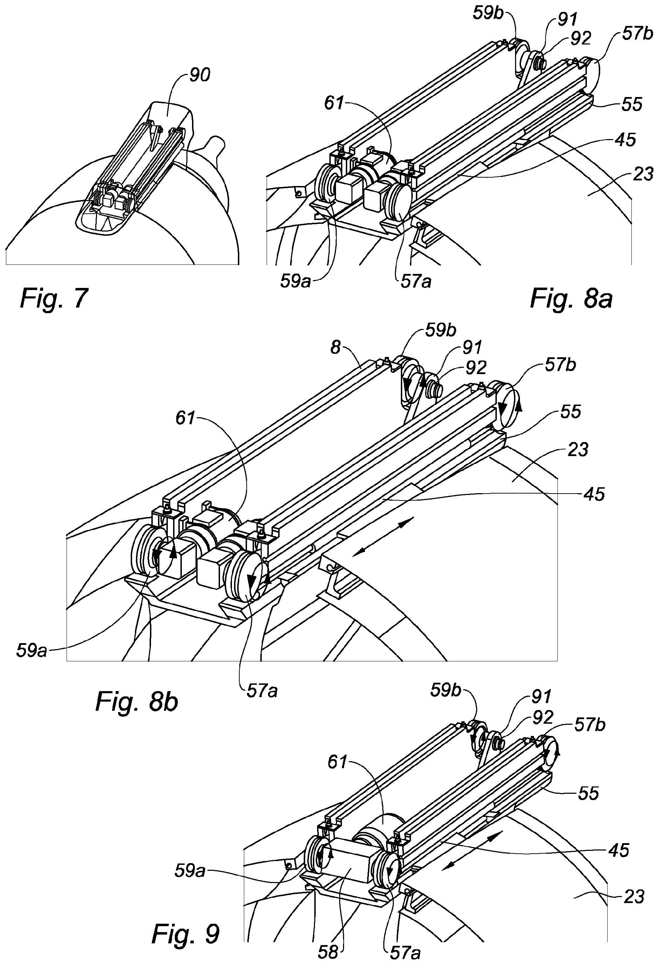

Ces actionneurs 43a et 43b vont être décrits plus en détails en référence aux figures 7 à 10.

En référence aux figures 4 et 5, des rails longitudinaux 45 sont disposés en partie supérieure du capot mobile 23, aux deux extrémités du capot destinées à être montées sur le pylône de suspension 8.

Ces rails sont adaptés pour permettre le coulissement du capot 23 dans deux glissières 30 longitudinales s'étendant selon l'axe longitudinal de la nacelle ménagées, dans une variante de réalisation, de part et d'autre des extrémités latérales d'une pièce montée sur le pylône de suspension 8.

Comme illustré sur la figure 14b, cette pièce est un profilé s'étendant selon l'axe longitudinal de la nacelle, qui peut présenter une section transversale en U complémentaire de celle du pylône 8, ce profilé 8a formant une base pour le pylône 8.

Ce profilé 8a est fixé au pylône 8 par des moyens de fixation adaptés.

Dans un exemple non limitatif, il peut s'agir de moyens de vissage.

Les glissières 30 peuvent être ménagées dans les branches du U s'étendant dans un plan comprenant l'axe longitudinal de la nacelle, comme illustré sur la figure 14b.

Dans une variante de réalisation illustrée sur la figure 14a, les deux glissières 30 sont ménagées directement sur les extrémités latérales du pylône de suspension 8 en regard des extrémités du capot 23, de part et d'autre du pylône 8.

Une origine des risques de coincement des rails 45 du capot mobile 23 dans leurs glissières 30 associées est le positionnement décalé vers le haut des actionneurs 43a et 43b, c'est-à-dire de leur positionnement fortement dissymétrique par rapport à un plan horizontal coupant la nacelle : un tel positionnement dissymétrique est en effet intrinsèquement générateur d'efforts d'arc-boutement entre les rails 45 du capot mobile 23 et leurs glissières 30 associées, lequel arc-boutement peut engendrer des frottements pouvant déboucher sur des situations de blocage.

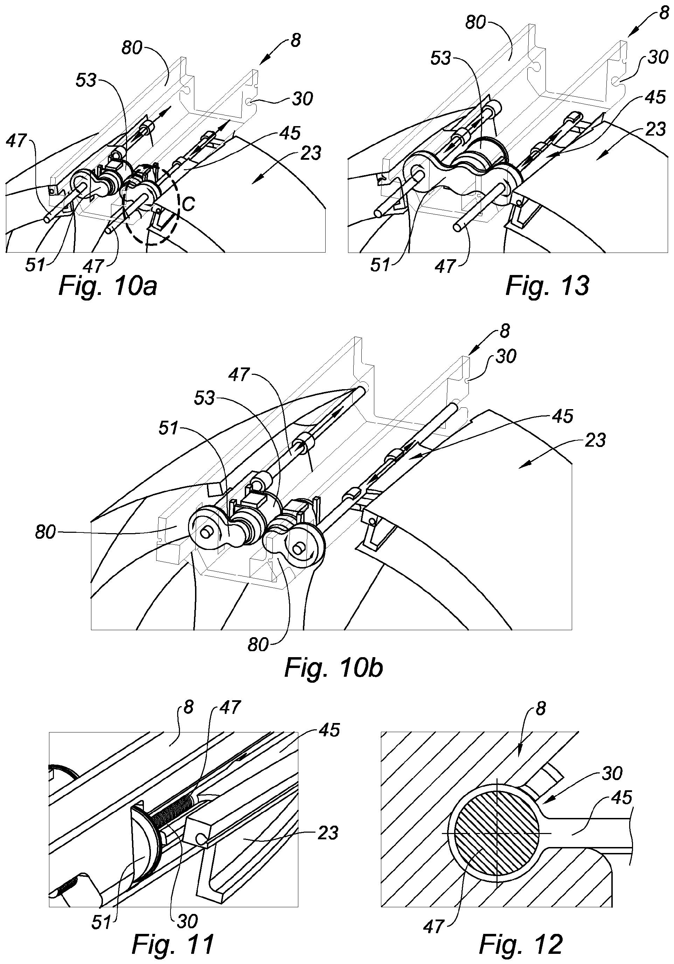

Une solution pour réduire ce risque de blocage provoqué par un tel arc-boutement consiste à placer chaque actionneur 43a et 43b dans le prolongement du rail associé 45 du capot mobile 23, comme cela est visible aux figures 8a et 10a notamment.

Dans une réalisation ne faisant pas partie de l'invention, illustrée sur les figures 10a, 10b, 11 à 13, chaque actionneur 43a et 43b est un actionneur linéaire à vis sans fin et écrou tournant.

Un tel actionneur 43 comprend un écrou rotatif 51 monté en rotation autour de l'axe longitudinal de la nacelle et entrainé par un moteur électrique ou hydraulique 53.

Cet écrou 51 est monté dans un logement adapté sur l'une des branches 80 latérales du profilé monté sur le pylône de suspension 8 ou directement sur l'une des branches 80 du pylône 8, en amont de la glissière 30 coopérant avec le rail 45 correspondant à déplacer.

Concernant le moteur 53, il peut être disposé dans le profilé attaché au pylône ou directement au pylône 8, en amont de la glissière 30 coopérant avec le rail 45. Comme illustré sur les figures 10a, 10b, le moteur peut être logé dans la concavité du pylône 8 dirigée vers l'extérieur de la nacelle.

L'actionneur comprend, en outre, une vis sans fin 47 translatante munie d'une portion filetée, ceci afin d'être couplée de façon adaptée avec l'écrou rotatif 51.

Cette vis 47 s'étend le long de l'axe longitudinal de la nacelle en amont du rail 45 à déplacer, ce rail étant solidaire d'une partie mobile pour déplacer le capot 23. Plus particulièrement, la vis 47 est alignée avec ledit rail 45.

Plus précisément, comme illustré sur la figure 12, la vis 47 et le rail 45 sont coaxiaux et la vis sans fin 47 est reliée au rail associé 45 par un moyen de liaison pouvant autoriser un léger décalage angulaire de cette vis 47 par rapport à ce rail 45, mais assurant un blocage en rotation de ces deux pièces l'une par rapport à l'autre.

La vis 47 et le rail 45 peuvent également être réalisés dans la même pièce.

Le mouvement de coulissement du rail 45 par rapport à sa glissière 30 associée et, par conséquent, du capot 23, est assuré par la vis sans fin 47, dont la translation est elle-même réalisée par l'écrou rotatif 51 en prise avec le pas de cette vis 47, et entraîné par le moteur 53.

Ainsi, la vis sans fin 47 est fixe en rotation grâce à sa liaison avec le rail 45 correspondant et sa translation relativement au pylône 8 assure le déplacement en translation du capot 23 en amont et en aval de la nacelle, entre ses positions d'ouverture et de fermeture grâce à la rotation de l'écrou 51 entrainé par le moteur 53, ledit écrou 51 étant fixe en translation relativement au pylône 8.

Dans une autre variante de réalisation illustrée sur la figure 13, un seul moteur 53 peut entrainer en rotation plusieurs écrous 51 de plusieurs actionneurs en regard, grâce à un système d'entrainement adapté, comme illustré sur la figure pour le cas de deux actionneurs comprenant un seul moteur électrique ou hydraulique 53.

Par ailleurs, un moteur dit de secours peut également être prévu.

De plus, une différence de pas entre les deux écrous 51 entrainés en rotation par l'unique moteur 53 est nécessaire, dans cette configuration monomoteur (avec ou sans moteur de secours).

On peut également prévoir des butées de fin de course (non illustrées) entre les deux positions extrêmes de la vis sans fin 47 correspondant aux positions de fermeture et d'ouverture du capot 23.

Il est à noter que le mouvement de l'écrou 51 est réversible. En effet, la direction du mouvement en translation de la vis sans fin 47 dépend de la direction de la rotation du moteur 53.

Avec cet agencement particulier, les efforts de poussée et de traction exercés par les actionneurs 43a et 43b s'exercent directement dans l'axe de glissement de chaque rail 45 avec la glissière 30 correspondante, supprimant ainsi tous les moments basculants et les risques d'arc-boutement et de coincement associés.

Dans une variante de réalisation non illustrée, les glissières 30 peuvent être ménagées sur le capot 23, tandis que les rails 45 sont ménagés sur le pylône 8 ou le profilé rattaché au pylône 8.

Dans cette variante de réalisation, le ou les moteurs 53 entraînant le ou les écrous 51 peuvent être montés sur la structure interne du capot 23.

Dans un mode de réalisation de l'invention illustré sur les figures 7 à 9 adapté pour réduire ces risques d'arc-boutement et de coincement, on peut utiliser des actionneurs 43 adaptés pour tirer sur les rails 45 relativement aux glissières 30 associées pour faire coulisser le capot 23 entre ses positions d'ouverture et de fermeture.

Dans un exemple non limitatif de réalisation, chaque actionneur 43 comprend un système de poulie-câble.

Ce système de poulie-câble, peut être recouvert d'un carénage de protection 90 adapté, comme illustré sur la figure 7.

Plus précisément, on fixe au moins un câble 55 à chaque rail 45 du capot mobile 23, ce câble 55 passant autour de deux poulies amont et aval 57a et 57b respectivement montées de part et d'autre du rail 45 sur une distance correspondant au moins à la distance qu'est destiné à parcourir le rail 45, lors du déplacement du capot mobile 23 entre ses positions de fermeture et d'ouverture, comme illustré sur les figures 8a et 8b notamment.

Il est à noter que le terme câble utilisé dans cette description définit les câbles, mais également tous les équivalents adaptés pour coopérer avec les poulies et déplacer le capot. On peut citer, ainsi, comme exemples non limitatifs de câble, toute chaine, corde ou courroie.

Plus précisément, les câbles 55 sont logés dans les glissières 30 longitudinales s'étendant le long du pylône 8, les glissières 30 étant formées sur les branches 80 du profilé monté sur le pylône de suspension 8 ou directement sur le pylône 8.

Concernant les poulies amont et aval 57a, 57b, elles peuvent prendre, classiquement, la forme d'une roue creusée d'une gorge destinée à recevoir le câble 55 correspondant pour transmettre le mouvement du câble 55 au rail concerné.

Dans un exemple de réalisation, les poulies amont et aval 57a et 57b sont montées, de façon similaire aux câbles 55, sur les branches 80 du profilé monté sur le pylône de suspension 8 ou directement sur le pylône 8.

Dans un actionneur, l'une des poulies amont et aval 57a ou 57b est libre, tandis que l'autre est entraînée par un moteur électrique ou hydraulique 61 pouvant être logé également dans le profilé 8a, attaché au pylône de suspension 8 ou directement au pylône 8.

Chaque poulie 57a ou 57b est montée en rotation autour d'un axe qui peut être perpendiculaire à l'axe longitudinal de la nacelle pour assurer un déplacement du capot 23 en translation selon ledit axe de la nacelle.

Concernant la poulie libre 57b, elle peut être fixée sur le profilé 8a solidaire du pylône 8 ou directement sur le pylône 8 par l'intermédiaire d'oreilles de fixation 91, comprenant un orifice 92 adapté pour coopérer avec la poulie correspondante, cette dernière étant fixée à l'oreille par des moyens de fixation adaptés, comme illustré sur la figure 8a.

Par ailleurs, un renvoi d'angle entre chaque poulie 57a, 57b et le moteur 61 associé peut être prévu.

De préférence, dans une variante de réalisation illustrée sur la figure 9, un seul moteur 61 est nécessaire pour entraîner les poulies 57, 59 de l'ensemble des actionneurs 43 en regard.

Comme illustré sur la figure 9, on observe que le moteur 61 entraîne, ainsi, une autre poulie amont 59a, 59b disposée en regard de la poulie amont 57a, et entraînant l'autre rail 45 du capot mobile 23.

On prévoit alors un arbre d'entraînement 58 reliant les poulies 57a et 59a entrainées par le moteur électrique ou hydraulique 61.

Le ou les moteurs peuvent entraîner indifféremment les poulies avant 57a, 59a ou arrière 57b, 59b d'un et/ou de plusieurs actionneurs.

Il peut également être envisagé d'entraîner la poulie amont d'un actionneur et la poulie aval de l'autre avec un seul moteur 61
De manière plus générale, il peut être prévu plusieurs poulies à chaque extrémité du rail 45 du capot mobile 23, dont le but est d'assurer un circuit du câble 55 différent de celui présenté dans les figures.

Dans un exemple non limitatif, les poulies peuvent être montées de sorte que le circuit formé par le câble 55 soit dévié au sein du pylône 8 ou du profilé 8a fixé au pylône 8.

Ce mécanisme particulier permet lui aussi d'exercer des efforts d'actionnement sur chaque rail 45 précisément dans l'axe de ce rail, permettant ainsi de réduire les risques d'arc-boutement et de coincement pouvant en résulter.

Par ailleurs, un dispositif tendeur, illustré sur les figures 8a, 8b et 9 par des galets tendeurs peut être prévu pour maintenir tendus le ou lesdits câbles 55, lors du déplacement des rails 45 et du capot 23.

Les cables 55 utilisés dans ce type d'actionneur peuvent être formés en matériau métallique ou synthétique.

Dans une variante de réalisation non illustrée, les glissières 30 et les poulies 57, 59 peuvent être ménagées sur le capot 23, tandis que les rails 45 sont ménagés sur le pylône 8 ou le profilé rattaché au pylône 8.

Dans cette variante de réalisation, le ou les moteurs 61 peuvent être fixés sur la structure interne du capot 23. La transmission de puissance au capot peut se faire par exemple à l'aide de frotteurs.

Toutefois, une manière complémentaire des précédentes pour réduire le couple de basculement du capot mobile 23 consiste à utiliser les volets d'inversion de poussée eux-mêmes.

Plus précisément, on peut choisir la géométrie du mouvement des volets d'inversion de poussée, de sorte qu'ils viennent en butée contre le bord amont de la paroi interne du capot mobile 23.

De la sorte, ces volets d'inversion de poussée, sous l'effet de la poussée exercée par le flux froid, viennent s'appuyer sur toute la circonférence du bord amont de la paroi interne, exerçant sur cette paroi interne, et donc sur l'ensemble du capot mobile 23, un effort de poussée réparti de manière circonférentielle.

Cette répartition circonférentielle de l'effort permet de contrer le couple de basculement engendré par le positionnement asymétrique des actionneurs 43a et 43b, et contribue ainsi activement à réduire les risques d'arc-boutement et de coincement consécutifs.

Comme on peut le voir à la lumière de ce qui précède, la présente invention fournit un inverseur de poussée de conception offrant une solution aux couples de basculement engendrés par les efforts engendrés par les actionneurs, lors de l'ouverture et de la fermeture du capot mobile.

Pour résoudre ces difficultés, on a recours aux actionneurs 43 susmentionnés, utilisés seuls ou en combinaison, permettant de compenser les efforts de basculement du capot mobile de l'inverseur de poussée.

On notera que le nombre d'actionneurs n'est pas limité à un nombre particulier.

On peut, ainsi, prévoir, dans des exemples non limitatifs de la présente invention, plus d'un actionneur de chaque coté du pylône de suspension 8, sans sortir du cadre de la présente invention.

On notera également que l'utilisation d'un inverseur de poussée à grilles rétractables est tout à fait optionnelle dans le cadre de la présente invention, mais qu'une telle utilisation concourt à réduire les efforts de basculement du capot mobile : la présence de grilles rétractables permet en effet de réduire la longueur du capot mobile 23.

Bien entendu, la présente invention n'est nullement limitée aux modes de réalisation décrits et représentés, fournis à titre purement illustratif.

## Revendications

1. Ensemble comprenant un pylône de suspension (8) et un inverseur de poussée comprenant des grilles de déviation de flux (25) et un capot (23) mobile entre une position d'ouverture dégageant lesdites grilles de déviation (25) et une position de fermeture recouvrant lesdites grilles de déviation (25) et comprenant, en outre, des rails (45) aptes à coulisser dans des glissières (30), les rails (45) étant montés directement ou indirectement sur ledit capot (23) et les glissières (30) étant montées directement ou indirectement de part et d'autre du pylône de suspension (8) ou inversement, l'inverseur de poussée comprenant au moins un actionneur (43) apte à faire coulisser le capot (23) entre ses positions d'ouverture et de fermeture, l'actionneur (43) étant disposé dans le prolongement du rail (45) correspondant,
**caractérisé en ce que** ledit actionneur est adapté pour tirer sur le rail correspondant ou sur la glissière correspondante le cas échéant, ledit actionneur comprenant au moins une poulie amont et une poulie aval (57a, 57b) respectivement montées de part et d'autre d'un rail (45) correspondant ou de la glissière correspondante le cas échéant, chaque poulie (57a, 57b) étant apte à tourner selon un axe qui peut être perpendiculaire à l'axe longitudinal de l'inverseur sous l'action d'au moins un moteur d'entraînement (61) et un élément de transmission de mouvement (55) adapté pour transmettre le mouvement de rotation des poulies (57a, 57b) audit rail ou à ladite glissière, le cas échéant.

2. Ensemble selon la revendication 1, **caractérisé en ce que** les glissières (30) ou les rails (45), le cas échéant, sont ménagés sur un profilé (8a) fixé au pylône (8) formant une base du pylône ou sur le pylône (8).

3. Ensemble selon la revendication 2, **caractérisé en ce que** les poulies (57a, 57b) et le moteur d'entraînement (61) sont montés dans le profilé (8a) fixé au pylône de suspension ou directement au pylône de suspension (8).

4. Ensemble selon la revendication 1, **caractérisé en ce que** les poulies (57a, 57b) et le ou les moteurs d'entraînement (61) sont montés dans le capot (23).

5. Ensemble selon la revendication 1, **caractérisé en ce qu'**un unique moteur d'entraînement (61) est apte à entrainer les poulies amont (57a, 59a) et/ou aval (57b, 59b) de plusieurs actionneurs.

6. Ensemble selon la revendication 1, **caractérisé en ce que** le ou les moteurs d'entraînement (61) peuvent entraîner indifféremment les poulies amont (57a, 59a) ou aval (57b, 59b) d'un et/ou de plusieurs actionneurs.

7. Ensemble selon l'une quelconque des revendications précédentes, **caractérisé en ce que** le capot mobile est monobloc.

8. Ensemble selon l'une quelconque des revendications précédentes, **caractérisé en ce qu'**il comprend, en outre, des volets d'inversion de poussée, agencés de manière à exercer un effort de poussée sur un bord amont d'une paroi interne dudit capot mobile.

## Patentansprüche

1. Einheit, umfassend einen Aufhängungsmast (8) und eine Schubumkehr, umfassend Stromumlenkungsgitter (25) und eine Abdeckung (23), die zwischen einer geöffneten Position, bei der die Umlenkungsgitter (25) freigegeben sind, und einer geschlossenen Position, bei der die Umlenkungsgitter (25) abgedeckt sind, beweglich ist und umfassend, ferner, Schienen (45), die imstande sind, in Gleitschienen (30) zu gleiten, wobei die Schienen (45) direkt oder indirekt auf der Abdeckung (23) angebracht sind und die Gleitschienen (30) direkt oder indirekt beiderseits des Aufhängungsmasts (8) angebracht sind oder umgekehrt, wobei die Schubumkehr mindestens einen Aktuator (43) umfasst, der imstande ist, die Abdeckung (23) zwischen ihrer geöffneten und geschlossenen Position zum Gleiten zu veranlassen, wobei der Aktuator (43) in der Verlängerung der entsprechenden Schiene (45) angeordnet ist, **dadurch gekennzeichnet, dass** der Aktuator geeignet ist, an der entsprechenden Schiene oder gegebenenfalls an der entsprechenden Gleitschiene zu ziehen, wobei der Aktuator mindestens eine vorgelagerte Rolle und eine nachgelagerte Rolle (57a, 57b) umfasst, die jeweils beiderseits einer entsprechenden Schiene (45) oder gegebenenfalls der entsprechenden Gleitschiene angebracht sind, wobei jede Rolle (57a, 57b) imstand ist, unter der Wirkung von mindestens einem Antriebsmotor (61) und einem Bewegungsübertragungselement (55), das geeignet ist, die Rotationsbewegung der Rollen (57a, 57b) an die Schiene oder gegebenenfalls an die Gleitschiene zu übertragen, gemäß einer Achse zu drehen, die zu der Längsachse der Umkehr senkrecht sein kann.

2. Einheit nach Anspruch 1, **dadurch gekennzeichnet, dass** die Gleitschienen (30) oder gegebenenfalls die Schienen (45) auf einem an dem Mast (8) befestigten Profil (8a), welches eine Basis des Masts bildet, oder auf dem Mast (8) installiert sind.

3. Einheit nach Anspruch 2, **dadurch gekennzeichnet, dass** die Rollen (57a, 57b) und der Antriebsmotor (61) in dem an dem Aufhängungsmast befestigten Profil (8a) oder direkt an dem Aufhängungsmast (8) angebracht sind.

4. Einheit nach Anspruch 1, **dadurch gekennzeichnet, dass** die Rollen (57a, 57b) und der oder die Antriebsmotoren (61) in der Abdeckung (23) angebracht sind.

5. Einheit nach Anspruch 1, **dadurch gekennzeichnet, dass** ein einziger Antriebsmotor (61) imstande ist, die vorgelagerten (57a, 59a) und/oder nachgelagerten (57b, 59b) Rollen mehrerer Aktuatoren anzutreiben.

6. Einheit nach Anspruch 1, **dadurch gekennzeichnet, dass** der oder die Antriebsmotoren (61) in gleicher Weise die vorgelagerten (57a, 59a) oder nachgelagerten (57b, 59b) Rollen eines und/oder mehrerer Aktuatoren antreiben können.

7. Einheit nach einem der vorangehenden Ansprüche, **dadurch gekennzeichnet, dass** die bewegliche Abdeckung einstückig ist.

8. Einheit nach einem der vorangehenden Ansprüche, **dadurch gekennzeichnet, dass** sie ferner Schubumkehrklappen umfasst, die derart eingerichtet sind, dass auf einen vorgelagerten Rand einer Innenwand der beweglichen Abdeckung eine Schubkraft ausgeübt wird.

## Claims

1. An assembly comprising a suspension pylon (8) and a thrust reverser comprising flow cascade vanes (25) and a cowl (23) movable between an open position exposing said cascade vanes (25) and a closed position covering said cascade vanes (25) and further comprising rails (45) capable of sliding in slides (30), the rails (45) being directly or indirectly mounted on said cowl (23) and the slides (30) being directly or indirectly mounted on either side of the suspension pylon (8) or vice versa, the thrust reverser comprising at least one actuator (43) capable of sliding the cowl (23) between its open and closed positions, the actuator (43) being disposed in the extension of the corresponding rail (45), **characterized in that** said actuator is adapted to pull on the corresponding rail or on the corresponding slide where appropriate, said actuator comprising at least one upstream pulley and one downstream pulley (57a, 57b) respectively mounted on either side of a corresponding rail (45) or the corresponding slide where appropriate, each pulley (57a, 57b) being capable of rotating about an axis which may be perpendicular to the longitudinal axis of the thrust reverser under the action of at least one driving motor (61) and one movement transmission element (55) adapted to transmit the rotational movement of the pulleys (57a, 57b) to said rail or said slide, where appropriate.

2. The assembly according to claim 1, **characterized in that** the slides (30) or the rails (45), where appropriate, are formed on a profile (8a) fastened to the pylon (8) forming a base of the pylon or on the pylon (8).

3. The assembly according to claim 2, **characterized in that** the pulleys (57a, 57b) and the driving motor (61) are mounted in the profile (8a) fastened to the suspension pylon or directly mounted to the suspension pylon (8).

4. The assembly according to claim 1, **characterized in that** the pulleys (57a, 57b) and the driving motor(s) (61) are mounted in the cowl (23).

5. The assembly according to claim 1, **characterized in that** a single driving motor (61) is capable of driving the upstream (57a, 59a) and / or downstream (57b, 59b) pulleys of several actuators.

6. The assembly according to claim 1, **characterized in that** the driving motor(s) (61) can indifferently drive the upstream (57a, 59a) or downstream (57b, 59b) pulleys of one and / or more actuators.

7. The assembly according to any one of the preceding claims, **characterized in that** the movable cowl is formed in one-piece.

8. The assembly according to any one of the preceding claims, **characterized in that** it further comprises thrust reverser flaps, arranged so as to exert a thrust force on an upstream edge of an inner wall of said movable cowl.
